# EUROPÄISCHE PATENTSCHRIFT

(11) **EP 3 209 904 B1**
(45) Veröffentlichungstag und Bekanntmachung des Hinweises auf die Patenterteilung: **12.02.2020**
(21) Anmeldenummer: 15781027.6
(22) Anmeldetag: 14.10.2015
(51) Int. Cl.: F16H 48/36, B60K 1/00, B60K 6/365, B60K 6/48, B60K 6/52

(54) **ANTRIEBSVORRICHTUNG FÜR EIN KRAFTFAHRZEUG, KRAFTFAHRZEUG UND VERFAHREN ZUM BETRIEB EINES KRAFTFAHRZEUGS**
DRIVE UNIT FOR A MOTOR VEHICLE, MOTOR VEHICLE, AND METHOD FOR OPERATING A MOTOR VEHICLE
UNITE' D'ENTRAINEMENT POUR VÉHICULE AUTOMOBILE, VÉHICULE AUTOMOBILE ET PROCÉDÉ D'OPÉRATION D'UN VÉHICULE AUTOMOBILE

(30) Priorität: 24.10.2014 DE 102014015793
(43) Veröffentlichungstag der Anmeldung: 30.08.2017
(73) Patentinhaber: Audi AG, 85045 Ingolstadt (DE)
(72) Erfinder: PINSCHMIDT, Udo, 85080 Gaimersheim (DE); SEIDE, Stefanie, 93339 Riedenburg (DE)
(74) Vertreter: Lehle, Josef
(86) Internationale Anmeldenummer: PCT/EP2015/002028
(87) Internationale Veröffentlichungsnummer: WO 2016/062384

(56) Entgegenhaltungen:
- WO-A1-2014/191091
- WO-A1-2015/185042
- WO-A2-2008/125364
- WO-A2-2014/124640
- DE-A1-102006 031 089
- DE-A1-102009 056 366
- DE-A1-102013 202 382

## Beschreibung

Die Erfindung betrifft eine Antriebsvorrichtung für ein Kraftfahrzeug, mit einem Differential zur Verteilung eines über eine Antriebswelle zuführbaren Antriebsmoments auf zwei Abtriebswellen und einem mit dem Differential, einer der Abtriebswellen und einem Zusatzmotor gekoppelten Überlagerungsgetriebe zur Überlagerung von von der Abtriebswelle, dem Differential und dem Zusatzmotor zugeführten Drehmomenten, wobei das Differential über eine momentreduzierende Übersetzungseinrichtung mit dem Überlagerungsgetriebe gekoppelt ist.

In Kraftfahrzeugen werden Differentiale genutzt, um ein durch einen Antriebsmotor bereitgestelltes Antriebsmoment auf verschiedene Räder einer Achse bzw. verschiedene Achsen zu verteilen. Um ein Durchdrehen von Rädern zu vermeiden und um in bestimmten Fahrsituationen gezielt Giermomente auf das Kraftfahrzeug zu übertragen ist es vorteilhaft, die Momentverteilung auf die Abtriebswellen eines solchen Differentials gezielt zu beeinflussen. Eine Möglichkeit hierfür ist das sogenannte elektronische Torque-Vectoring, bei dem ein Zusatzmotor genutzt wird, um die Verteilung der Drehmomente auf die Abtriebswellen des Differentials zu beeinflussen. Torque-Vectoring beschreibt in diesem Fall die Drehmomentenverteilung sowohl zum schneller drehenden als auch zum langsamer drehenden Rad einer Fahrzeugachse.

Aus der Druckschrift WO 2006/010186 A1 ist ein elektrisches Torque-Vectoring-Getriebe bekannt, bei dem ein Antriebsmoment über ein Kegelraddifferential auf zwei Abtriebswellen übertragen wird. Eine Überlagerung eines zusätzlichen Drehmoments eines Elektromotors erfolgt über zwei Planetengetriebe, womit erreicht wird, dass der Elektromotor bei gleich schnell drehenden Rädern still steht. Problematisch ist hierbei, dass aufgrund der Nutzung eines Kegelraddifferentials eine hohe Übersetzung des Elektromotors mit entsprechend vielen Übersetzungsstufen notwendig ist und dass die Planetengetriebe bei der beschriebenen Anordnung relativ stark belastet werden.

Eine weitere Möglichkeit ein elektrisches Torque-Vectoring-Getriebe auszubilden ist in der Druckschrift DE 10 2005 049 707 A1 beschrieben. Teile des Überlagerungsgetriebes sind hierbei in das Differential des Fahrzeugs integriert. Nachteilig bei der beschriebenen Anordnung ist es, dass die Planetengetriebe stets wälzen. Um einen Stillstand des Elektromotors bei gleich schnell drehenden Abtriebswellen zu erreichen, ist es erforderlich eine zusätzliche parallele Welle vorzusehen.

Auch die Druckschrift US 5 387 161 offenbart ein elektrisches Torque-Vectoring-Getriebe. Das Differential wird hierbei durch ein Stirnradplanetengetriebe gebildet. Das Übertragungsgetriebe ist mit dem Differential über eine Stirnradstufe gekoppelt und umfasst ein Planetengetriebe. Insbesondere die Stirnradstufe ist bei der beschriebenen Anordnung hohen Belastungen ausgesetzt und erfordert daher eine entsprechende Bauteildimensionierung.

Um hohen Belastungen eines Überlagerungsgetriebes bei einem elektronischen Torque-Vectoring zu reduzieren, schlägt die Druckschrift WO 2008/125364 A2 vor, ein zusätzliches Planetengetriebe zur Momentreduktion zwischen einem Überlagerungsgetriebe und dem Differential vorzusehen. Dieses kann insbesondere in Form eines Ravigneaux-Satzes gemeinsam mit dem Differential des Kraftfahrzeugs ausgebildet werden. In diesem Fall wird das Überlagerungsgetriebe mit ca. einem Viertel des Raddifferenzmoments belastet, womit das Getriebe insgesamt klein und leicht baubar ist.

Daneben ist bekannt, einen im Rahmen des elektrischen Torque-Vectoring genutzten Elektromotor auch zur Bereitstellung von Hybrid-Funktionen in einem Kraftfahrzeug zu nutzen. So schlägt die Druckschrift DE 10 2010 036 240 vor, den Elektromotor wahlweise derart mit dem Differential des Kraftfahrzeugs zu koppeln, dass ein durch den Elektromotor bereitgestelltes Antriebsmoment auf die Abtriebswellen des Differentials und somit auf die Räder des Kraftfahrzeugs verteilt wird oder den Elektromotor derart mit einem Überlagerungsgetriebe zu koppeln, dass er für ein Torque-Vectoring nutzbar ist. Die vollständige Entkopplung der Momentpfade für einen Hybrid-Betrieb einerseits und für ein Torque-Vectoring-Betrieb andererseits führt zu einer relativ aufwendigen Bauweise, wobei typischerweise zusätzliche Planeten-oder Stirnradgetriebe notwendig sind, um die gewünschten Übersetzungen im Hybrid- bzw. Torque-Vectoring-Modus zu erreichen. Daneben werden die Komponenten des Überlagerungsgetriebes relativ stark belastet.

Die Druckschrift DE 10 2006 031 089 offenbart ein Torque-Vectoring-Getriebe, bei dem ein Getriebezug für den Hybrid-Modus und ein Getriebezug für einen Torque-Vectoring-Modus zumindest teilweise gemeinsam ausgebildet sind. Eine Umschaltung zwischen den verschiedenen Betriebsmodi erfolgt durch das Verschieben einer Schaltmuffe. Die Ausbildung des Getriebes ist relativ aufwendig, insbesondere da gestufte Planetenräder erforderlich sind. Zudem wird das Überlagerungsgetriebe im Torque-Vectoring-Modus relativ stark belastet. Die Übersetzungen zwischen dem Elektromotor und dem Raddifferenzmoment im Torque-Vectoring-Modus bzw. dem Antriebsmoment im Hybrid-Modus sind zudem gleich. Typischerweise sind jedoch unterschiedliche Übersetzungen in den verschiedenen Modi gewünscht.

Die Druckschrift WO 2014/124640 A offenbart eine Antriebsvorrichtung und ein Verfahren gemäß dem Oberbegriff der unabhängigen Ansprüche.

Der Erfindung liegt somit die Aufgabe zugrunde, eine Antriebsvorrichtung für ein Kraftfahrzeug anzugeben, die einerseits eine flexible Nutzung eines im Rahmen eines Torque-Vectoring genutzten Zusatzmotors und andererseits eine gegenüber dem Stand der Technik geringere Belastung eines Überlagerungsgetriebes während eines Torque-Vectorings möglich.

Die Aufgabe wird erfindungsgemäß durch eine Antriebsvorrichtung der eingangs genannten Art gelöst, wobei das Überlagerungsgetriebe eine durch eine Steuereinrichtung steuerbare Schalteinrichtung umfasst, wobei das Überlagerungsgetriebe in einem ersten Schaltzustand der Schalteinrichtung die von der Abtriebswelle, dem Differential und dem Zusatzmotor zugeführten Drehmomente derart überlagert, dass die Verteilung des Antriebsmoments auf die Abtriebswellen von einem durch den Zusatzmotor ausgeübten Zusatzdrehmoment abhängt, und in einem zweiten Schaltzustand der Schalteinrichtung die von der Abtriebswelle, dem Differential und dem Zusatzmotor zugeführten Drehmomente derart überlagert, dass das Zusatzdrehmoment gleichmäßig auf beide Abtriebswellen verteilt wird.

Erfindungsgemäß wird somit vorgeschlagen eine Antriebsvorrichtung mit einem Differential und einem über eine momentreduzierende Übersetzungseinrichtung mit dem Differential gekoppelten Überlagerungsgetriebe, wie sie beispielsweise aus der Druckschrift WO 2008/125364 A2 bekannt ist, zu modifizieren, indem in dem Überlagerungsgetriebe eine steuerbare Schalteinrichtung vorgesehen wird. Durch die erfindungsgemäß vorgesehene Schaltvorrichtung kann die Art der Überlagerung der dem Überlagerungsgetriebe zugeführten Drehmomente umgeschaltet werden. Je nach Schaltzustand der Schalteinrichtung kann die Überlagerung der Drehmomente derart erfolgen, dass ein von dem Zusatzmotor bereitgestelltes Drehmoment einen Drehmomentunterschied zwischen den Abtriebswellen des Differentials erhöht, das heißt ein Torque-Vectoring bewirkt, oder derart, dass ein Drehmoment des Zusatzmotors im Wesentlichen gleichmäßig auf die Abtriebswellen wirkt, womit ein Antrieb der Abtriebswellen bzw. eine Rekuperation von Bewegungsenergie durch den Zusatzmotor möglich ist. Der Zusatzmotor kann insbesondere ein Elektromotor sein, dem ein Energiespeicher zugeordnet sein kann, womit in dem zweiten Schaltzustand Funktionen für einen Hybrid-Betrieb des Kraftfahrzeugs bereitgestellt werden.

Gegenüber bekannten Antriebsvorrichtungen, die eine entsprechende Umschaltung einer Funktion eines Elektromotors ermöglichen, sieht die erfindungsgemäße Antriebsvorrichtung vorteilhaft vor, eine Schalteinrichtung zur Umschaltung zwischen den Nutzungen eines Zusatzmotors innerhalb eines Überlagerungsgetriebes vorzusehen, dem von dem Differential ein durch die Übersetzungseinrichtung reduziertes Drehmoment zugeführt ist. Durch eine derartige Ausbildung der Antriebsvorrichtung treten im Überlagerungsgetriebe geringere Drehmomente bzw. Kräfte auf, womit das Überlagerungsgetriebe entsprechend klein und leicht baubar ist. Da eine Umschaltung zwischen den Nutzungen des Zusatzmotors innerhalb des Überlagerungsgetriebes erfolgt, ist auch diese Umschaltung bei relativ geringen Drehmomenten bzw. Kräften möglich.

Im zweiten Schaltzustand wird das Zusatzdrehmoment im Wesentlichen gleichmäßig auf beide Abtriebswellen verteilt. Aufgrund von Bauteiltoleranzen oder ähnlichem kann das Zusatzdrehmoment, das den einzelnen Abtriebswellen zugeführt wird, geringfügig voneinander abweichen. Die Verteilung des Zusatzdrehmoments auf die Abtriebswelle erfolgt vorzugsweise nach einer Skalierung des Zusatzdrehmoments durch eine oder mehrere Übersetzungsstufen.

Die Übersetzungen innerhalb der Antriebsvorrichtung sind vorteilhaft so gewählt, dass bei einer gleichen Drehzahl der Abtriebswellen der Zusatzmotor steht.

Das Überlagerungsgetriebe kann eine Überlagerungseinrichtung umfassen, die die von der Abtriebswelle und dem Zusatzmotor zugeführten Drehmomente mit einem aus dem von dem Differential zugeführten abgeleiteten Drehmoment überlagert, wobei das abgeleitete Drehmoment in dem ersten Schaltzustand einen ersten Drehsinn und in dem zweiten Schaltzustand einen dem ersten Drehsinn entgegengesetzten zweiten Drehsinn aufweist. Ein Schalten der Schalteinrichtung zwischen dem ersten und dem zweiten Schaltzustand ändert somit den Drehsinn des abgeleiteten Drehmoments. Ergänzend kann der Betrag des abgeleiteten Drehmoments je nach Schaltzustand unterschiedlich sein, beispielsweise wenn im ersten Schaltzustand und im zweiten Schaltzustand unterschiedliche Übersetzungen genutzt werden. Die Schalteinrichtung kann den Drehsinn des abgeleiteten Drehmoment selbst ändern oder weitere Komponenten des Überlagerungsgetriebes, insbesondere Kupplungen, Bremsen oder ähnliches, ansteuern, um den Drehsinn des abgeleiteten Drehmoments anzupassen.

Vorzugsweise umfasst das Überlagerungsgetriebe ein erstes, ein zweites und ein drittes Planetengetriebe, die jeweils ein Hohlrad, ein Sonnenrad und wenigstens ein an einem Planetenträger angeordnetes Planetenrad umfassen, wobei das erste Planetengetriebe die Überlagerungseinrichtung bildet, der das abgeleitete Drehmoment im ersten Schaltzustand über das zweite Planetengetriebe und im zweiten Schaltzustand über das dritte Planetengetriebe zugeführt ist. Planetengetriebe umfassen wenigstens drei "Wellen" bzw. Angriffspunkte für Drehmomente um eine Zentralachse. So können Drehmomente an dem Sonnenrad, an dem Hohlrad, das insbesondere das Gehäuse des Planetengetriebes bildet, und an dem Planetenträger eingekoppelt werden. Ein Planetengetriebe kann in einem Zweiwellenbetrieb genutzt werden, um Drehmomente mit einer vorgegebenen Übersetzung zu übertragen, wobei eine der Wellen drehfest angeordnet ist bzw. durch eine Kupplung, eine Bremse oder ähnliches drehfest gehalten wird. Sind alle Wellen beweglich, so arbeitet ein Planetengetriebe in einem Dreiwellenbetrieb als Überlagerungsgetriebe, wobei beispielsweise ein an einer Welle eingekoppeltes Drehmoment auf die beiden anderen Wellen verteilt werden kann oder über zwei Wellen eingekoppelte Drehmomente auf der dritten Welle überlagert werden.

Die Schalteinrichtung kann derart ausgebildet sein, dass je nach Schaltzustand ein zweites oder ein drittes Planetengetriebe ausgewählt wird, über dass das abgeleitete Drehmoment dem ersten Planetengetriebe zugeführt wird. Durch eine Nutzung unterschiedlicher Kopplungen des zweiten und des dritten Planetengetriebe zu der Übersetzungseinrichtung und/oder zu dem ersten Planetengetriebe kann die Umkehrung des Drehsinns zwischen den Schaltzuständen erreicht werden.

Vorteilhaft können das erste, das zweite und das dritte bzw. nur das zweite und das dritte Planetengetriebe baugleich ausgebildet sein, womit ein besonders effizienter Aufbau der erfindungsgemäßen Antriebsvorrichtung möglich ist, da gleich ausgebildete Bauteile für mehrere Funktionen nutzbar sind.

Die Hohlräder des ersten, des zweiten und des dritten Planetengetriebes können als ein gemeinsames Hohlrad ausgebildet sein. Somit wird eine starre Kopplung zwischen den drei Hohlrädern erreicht. In diesem Fall kann die Zuführung des abgeleiteten Drehmoments von dem zweiten bzw. dem dritten Planetengetriebe zu dem ersten Planetengetriebe über das gemeinsame Hohlrad erfolgen.

Die Schalteinrichtung kann ausgebildet sein, in dem ersten Schaltzustand eine Rotation des Hohlrades, des Sonnenrades oder des Planetenträgers des zweiten Planetengetriebes zu blockieren und in dem zweiten Schaltzustand eine Rotation des Hohlrades, des Sonnenrades oder des Planetenträgers des dritten Planetengetriebes zu blockieren. Das jeweils blockierte Planetengetriebe arbeitet somit im Zweiwellenbetrieb und kann ein Drehmoment, das direkt oder indirekt von der Übersetzungseinrichtung zugeführt ist, mit einem definierten Drehsinn und einer definierten Übersetzung zwischen den beiden nicht blockierten Wellen übertragen. Vorteilhaft werden im ersten und im zweiten Schaltzustand unterschiedliche Arten von Wellen, also beispielsweise im ersten Schaltzustand das Sonnenrad des zweiten Planetengetriebes und im zweiten Schaltzustand der Planetenträger des dritten Planetengetriebes, blockiert. Dabei kann eine Welle, also das Sonnenrad, der Planetenträger oder das Hohlrad, des ersten Planetengetriebes sowohl mit einer Welle des zweiten Planetengetriebes als auch mit einer Welle des dritten Planetengetriebes gekoppelt sein. Über diese Welle kann dem ersten Planetengetriebe das abgeleitete Drehmoment zugeführt werden. Dies ist insbesondere durch ein gemeinsames Hohlrad des ersten, des zweiten und des dritten Planetengetriebes möglich.

Eine der Wellen des zweiten und des dritten Planetengetriebes ist je nach Schaltzustand jeweils blockiert oder läuft frei. Läuft diese eine Welle frei, so sind beliebige relative Drehungen der beiden anderen Wellen dieses Planetengetriebes möglich, womit durch das jeweilige Planetengetriebe keine Drehmomentübertragung zwischen diesen Wellen erfolgt. Ist diese Welle blockiert, so arbeitet das entsprechende Planetengetriebe im Zweiwellenbetrieb, womit eine definierte Kopplung mit einer vorgegebenen Übersetzung und einem vorgegebenen relativen Drehsinn zwischen den Drehmomenten an den anderen beiden Wellen erfolgt.

Wird nun einer jeweils dritten Welle des zweiten und des dritten Planetengetriebes, die jeweils jene Welle ist, die weder mit einer Welle des ersten Planetengetriebes starr gekoppelt ist noch die Welle ist, die blockierbar ist bzw. frei läuft, das Drehmoment vom Differential über die Übersetzungseinrichtung zugeführt, so wird das zugeführte Drehmoment durch das zweite oder das dritte Planetengetriebe zu dem ersten Planetengetriebe übertragen, je nachdem, bei welchem der Planetengetriebe die blockierbare Welle blockiert ist. Bei entsprechender Zuordnung der Wellen, beispielsweise bei einer Blockierung eines Sonnenrads im ersten Schaltzustand und einer Blockierung eines Planetenträgers im zweiten Schaltzustand, ändert sich aufgrund des unterschiedlichen Momentübertragungsweges auch der Drehsinn des abgeleiteten Drehmoments zwischen den Schaltzuständen.

Vorteilhaft umfasst die Schalteinrichtung eine erste Bremsvorrichtung zum Bremsen des Hohlrades, des Sonnenrades oder des Planetenträgers des zweiten Planetengetriebes und eine zweite Bremsvorrichtung zum Bremsen des Hohlrades, des Sonnenrades oder des Planetenträgers des dritten Planetengetriebes, wobei im ersten Schaltzustand die erste Bremseinrichtung und im ersten Schaltzustand die zweite Bremseinrichtung aktiv ist. Insbesondere kann als Bremseinrichtung eine Lamellenbremse genutzt werden. Durch ein Bremsen der entsprechenden Wellen ist eine Blockade besonders einfach bei geringer Geräuschentwicklung möglich. Alternativ oder ergänzend zum Bremsen der jeweiligen Welle könnte eine form- und/oder kraftschlüssige Kopplung, beispielsweise durch eine Klauenkupplung, erfolgen.

In einer alternativen Ausführungsform können das Hohlrad, das Sonnenrad oder der Planetenträger des zweiten Planetengetriebes und das Hohlrad, das Sonnenrad oder der Planetenträger des dritten Planetengetriebes dauerhaft blockiert sein, wobei die Schalteinrichtung eine Kupplungseinrichtung umfasst, die das dem Überlagerungsgetriebe von dem Differential zugeführte Drehmoment in dem ersten Schaltzustand dem zweiten Planetengetriebe und in dem zweiten Schaltzustand dem dritten Planetengetriebe zuführt. In diesem Fall arbeiten das zweite und das dritte Planetengetriebe stets im Zweiwellenbetrieb, womit das Planetengetriebe, dem das über die momentreduzierende Übersetzungseinrichtung von dem Differential zugeführte Drehmoment zugeführt wird, dieses mit einer festen Übersetzung und mit einem vorgegebenen relativen Umlaufsinn an das erste Planetengetriebe überträgt. Jenes Planetengetriebe, dem dieses Drehmoment nicht zugeführt wird, weist eine freilaufende Welle auf, womit es lastfrei mitläuft. Die Kupplungseinrichtung kann eine Kupplungseinrichtung zur formschlüssigen und/oder zur kraftschlüssigen Kupplung sein. Insbesondere kann eine Klauenkupplung genutzt werden.

Als das erste und/oder das zweite Planetengetriebe kann ein Planetengetriebe mit zwei Planetenradsätzen genutzt werden. Bei einem derartigen Planetengetriebe kann das Sonnenrad über zwei Planetenradsätze, die insbesondere in unterschiedlichen Abständen zu einer Zentralachse des Planetengetriebes an einem gemeinsamen Planetenträger angeordnet sind, mit dem Hohlrad gekoppelt sein. Derartige Planetengetriebe ermöglichen größere Unterschiede zwischen dem Hohlraddurchmesser und dem Sonnenraddurchmesser. Eine Wahl eines entsprechenden Planetengetriebes als das erste und/oder das zweite Planetengetriebe eröffnet weitere Möglichkeiten bei der Anpassung der relativen Übersetzungen in dem ersten und dem zweiten Schaltzustand.

Das Differential kann als doppeltes Planetengetriebe mit einem ersten und einem zweiten Planetenradsatz und einem ersten und einem zweiten Sonnenrad ausgebildet sein, wobei ein durch das Antriebsmoment antreibbares Hohlrad über das erste Sonnenrad und den ersten und den zweiten Planetenradsatz mit einer der Abtriebswellen und über den zweiten Planetenradsatz und das zweite Sonnenrad als momentreduzierendes Übersetzungselement mit dem Überlagerungsgetriebe gekoppelt ist. Das doppelte Planetengetriebe kann insbesondere als Ravigneaux-Satz ausgebildet sein. Das Vorsehen eines zweiten Sonnenrades stellt einen weiteren Momentabgriff für das Differential bereit, an dem ein reduziertes Drehmoment abgegriffen werden kann. Die Ausbildung der Übersetzungseinrichtung erfolgt also unter Mitbenutzung von Komponenten des Differentials, womit ein insgesamt einfacher Aufbau der erfindungsgemäßen Antriebsvorrichtung möglich ist.

Alternativ kann das Differential als ein Kegelraddifferential ausgebildet sein, wobei als momentreduzierende Übersetzungseinrichtung ein weiteres Planetengetriebe, das ein von einem Gehäuse des Kegelraddifferentials zugeführtes Drehmoment mit einem von einer der Abtriebswellen zugeführten Drehmoment zur Bereitstellung des dem Überlagerungsgetriebe zugeführten Drehmoments überlagert. Dabei sind verschiedene Zuordnungen der jeweiligen Drehmomente bzw. des Drehmomentabgriffs zu den Wellen des weiteren Planetengetriebes möglich.

Neben der erfindungsgemäßen Antriebsvorrichtung betrifft die Erfindung ein Kraftfahrzeug, das eine erfindungsgemäße Antriebsvorrichtung und einen Antriebsmotor zur Bereitstellung des Antriebsmoments umfasst. Der Antriebsmotor kann ein Verbrennungsmotor und der Zusatzmotor ein Elektromotor sein.

Ergänzend kann das Kraftfahrzeug eine Steuereinrichtung umfassen, die die Schalteinrichtung steuert. Diese kann ausgebildet sein, ein Laden eines Energiespeichers zu ermöglichen, der dem Zusatzmotor zugeordnet ist, indem zur Rekuperation, insbesondere bei einem Abbremsen des Kraftfahrzeugs, die Schalteinrichtung im zweiten Schaltzustand betrieben wird und der Zusatzmotor als Generator betrieben wird. In weiteren Betriebszuständen des Kraftfahrzeugs kann, insbesondere in Abhängigkeit von einer Geschwindigkeit, einem Giermoment und einem Lenkwinkel des Kraftfahrzeugs, zwischen einem Torque-Vectoring, wobei die Schalteinrichtung im ersten Schaltzustand betrieben wird, und einem Antrieb des Kraftfahrzeugs durch den Zusatzmotor bzw. einer Unterstützung des Antriebs durch den Zusatzmotor, wobei die Schalteinrichtung jeweils im zweiten Schaltzustand betrieben wird, gewechselt werden.

Ergänzend betrifft die Erfindung ein Verfahren zum Betrieb eines Kraftfahrzeugs mit einem Antriebsmotor und einer Antriebsvorrichtung zum Antrieb der Räder wenigstens einer Achse des Kraftfahrzeugs, wobei die Antriebsvorrichtung ein Differential, durch das ein Antriebsmoment, das über eine Antriebswelle von dem Antriebsmotor zugeführt wird, auf zwei Abtriebswellen verteilt wird, und ein mit dem Differential, einer der Abtriebsachsen und einem Zusatzmotor gekoppeltes Überlagerungsgetriebe, durch das von der Abtriebsachse, dem Differential und dem Zusatzmotor zugeführte Drehmomente überlagert werden, umfasst, wobei das Differential über eine momentreduzierende Übersetzungseinrichtung mit dem Überlagerungsgetriebe gekoppelt ist, wobei das Überlagerungsgetriebe eine Schalteinrichtung umfasst, die durch eine Steuereinrichtung gesteuert wird, wobei durch das Überlagerungsgetriebe in einem ersten Schaltzustand der Schalteinrichtung die von der Abtriebsachse, dem Differential und dem Zusatzmotor zugeführten Drehmomente derart überlagert werden, dass die Verteilung des Antriebsmoments auf die Abtriebswellen von einem durch den Zusatzmotor ausgeübten Zusatzdrehmoment abhängt, und in einem zweiten Schaltzustand der Schalteinrichtung die von der Abtriebsachse, dem Differential und der Zusatzmaschine zugeführten Drehmomente derart überlagert werden, dass das Zusatzdrehmoment gleichmäßig auf beide Abtriebswellen verteilt wird.

Dabei kann in wenigstens einem Betriebsmodus der Steuereinrichtung die Schalteinrichtung in dem zweiten Schaltzustand betrieben werden, wobei der Zusatzmotor durch die Steuereinrichtung zur Bereitstellung eines Drehmoments zum Antrieb des Kraftfahrzeugs angesteuert wird. Dabei ist es möglich, das Kraftfahrzeug alleine durch das durch den Zusatzmotor bereitgestellte Zusatzmoment anzutreiben, es ist jedoch auch möglich, das Antriebsmoment des Antriebsmotors zu unterstützen, also eine "Boost"-Funktion zur Steigerung der Fahrleistung bereitzustellen. Dabei können durch den Zusatzmotor ausschließlich die Hinterräder des Kraftfahrzeugs angetrieben werden und durch den Antriebsmotor die Vorderräder. Alternativ ist es jedoch auch möglich, Antriebsmomente des Zusatzmotors und des Antriebsmotors auf der Hinterachse zu überlagern.

Als Zusatzmotor kann ein Elektromotor mit einer zugeordneten Energiespeichereinrichtung genutzt werden, wobei in wenigstens einem Betriebsmodus der Steuereinrichtung die Schalteinrichtung in dem zweiten Schaltzustand betrieben wird, wobei der Zusatzmotor als Generator zum Laden der Energiespeichereinrichtung betrieben wird. Es ist somit ein Rekuperationsbetrieb durch den Zusatzmotor möglich.

Wie bereits erläutert ist bei einem Betrieb der Schalteinrichtung in dem ers-ten Schaltzustand eine Nutzung des Zusatzmotors zur Umverteilung von Drehmomenten auf die Abtriebswellen, also zum Torque-Vectoring, möglich.

Das erfindungsgemäße Verfahren kann entsprechend der zur erfindungsgemäßen Abtriebsvorrichtung erläuterten Merkmale mit den dort genannten Vorteilen weitergebildet werden. Insbesondere ist es möglich, dass ein Überlagerungsgetriebe genutzt wird, das ein erstes, ein zweites und ein drittes Planetengetriebe umfasst, die die zur Antriebsvorrichtung erläuterten Funktionen aufweisen. Eine Anpassung des dem ersten Planetengetriebe zugeführten abgeleiteten Drehmoments ist insbesondere möglich, indem in dem ersten Schaltzustand durch die Schalteinrichtung eine Rotation des Hohlrades, des Sonnenrades oder des Planetenträgers des zweiten Planetengetriebes blockiert wird und in dem zweiten Schaltzustand eine Rotation des Hohlrades, des Sonnenrades oder des Planetenträgers des dritten Planetengetriebes blockiert wird. Das Blockieren kann jeweils insbesondere erfolgen, indem das jeweilige Hohlrad, Sonnenrad oder der jeweilige Planetenträger durch eine Bremsvorrichtung gebremst wird.

Alternativ hierzu kann, wie zur erfindungsgemäßen Antriebsvorrichtung erläutert, eine Kupplungseinrichtung genutzt werden, durch die das dem Überlagerungsgetriebe vom Differential zugeführte Drehmoment in dem ersten Schaltzustand dem ersten Planetengetriebe über das zweite Planetengetriebe und in dem zweiten Schaltzustand über das dritte Planetengetriebe zugeführt wird.

Weitere Vorteile und Einzelheiten der Erfindung ergeben sich aus den folgenden Ausführungsbeispielen sowie den zugehörigen Zeichnungen. Dabei zeigen schematisch:
- Fig. 1: ein Ausführungsbeispiel eines erfindungsgemäßen Kraftfahrzeugs,
- Fig. 2: ein Ausführungsbeispiel einer erfindungsgemäßen Antriebsvorrichtung,
- Fig. 3, 4 und 5: die Übertragungspfade und Richtungen von Drehmomenten in verschiedenen Betriebszuständen der in Fig. 2 gezeigten Antriebsvorrichtung, und
- Fig. 6 - 8: weitere Ausführungsbeispiele erfindungsgemäßer Antriebsvorrichtungen.

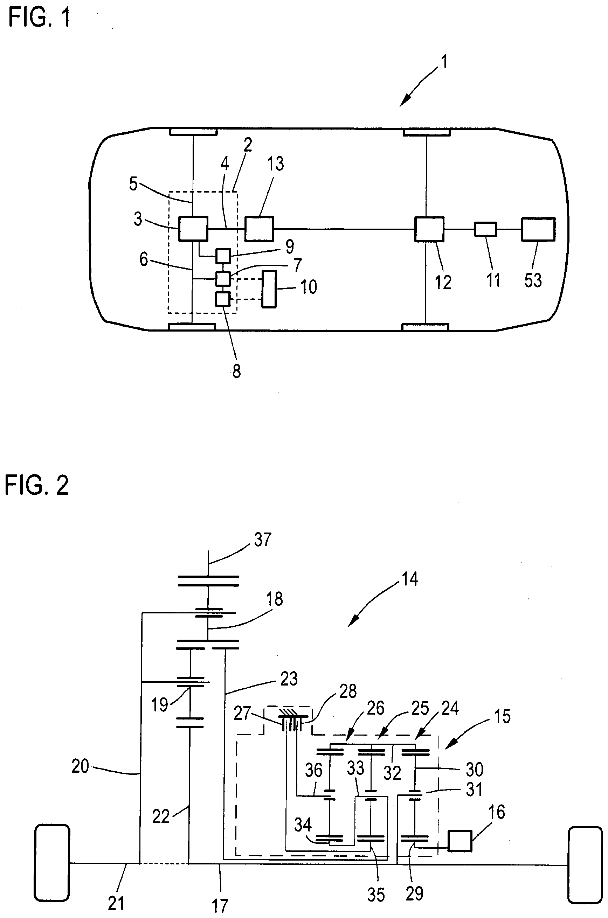

Fig. 1 zeigt ein Kraftfahrzeug 1, das eine Antriebsvorrichtung 2 umfasst, die ausgebildet ist ein von einem Antriebsmotor 53 des Kraftfahrzeugs 1 über eine Antriebswelle 4 bereitstellbares Drehmoment mithilfe eines Differentials 3 auf die Abtriebswellen 5, 6 zu verteilen. Um die Verteilung des Antriebsmoments auf die Abtriebswellen 5, 6 zu beeinflussen, und um Hybrid-Funktionen für das Kraftfahrzeug bereitzustellen, umfasst die Antriebsvorrichtung 2 zudem ein Überlagerungsgetriebe 7, durch das Drehmomente überlagert werden, die dem Überlagerungsgetriebe 7 von der Abtriebswelle 6, dem Differential 3 und einem Zusatzmotor 8 zugeführt werden. Die Zuführung der Drehmomente von dem Differential 3 erfolgt über eine momentreduzierende Übersetzungseinrichtung 9, die ein am Differential abgegriffenes Drehmoment reduziert, um Belastungen des Überlagerungsgetriebes 7 zu reduzieren.

Das Überlagerungsgetriebe 7 umfasst eine nicht dargestellte Schalteinrichtung, die beeinflusst, in welcher Art die dem Überlagerungsgetriebe zugeführten Drehmomente überlagert werden, und die durch die Steuereinrichtung 10 steuerbar ist. In einem ersten Schaltzustand werden die von der Abtriebswelle 6, von dem Differential 3 über die Übersetzungseinrichtung 9 und von dem Zusatzmotor 8 zugeführten Drehmomente derart überlagert, dass die Verteilung eines über die Antriebswelle 4 bereitgestellten Antriebsmoments auf die Abtriebswellen 5, 6 von einem durch den Zusatzmotor 8 ausgeübten Zusatzdrehmoment abhängt. Die Antriebsvorrichtung 2 dient somit als Torque-Vectoring-Einrichtung, die Drehmomente des Antriebsmotors auf die Räder verteilt. Der Zusatzmotor 8 ist durch die Steuereinrichtung 10 steuerbar, um die Momentverteilung zu beeinflussen.

Im zweiten Schaltzustand der Schalteinrichtung erfolgt die Überlagerung der zugeführten Drehmomente derart, dass das durch den Zusatzmotor 8 bereitgestellte Zusatzdrehmoment, soweit im Rahmen von Bauteiltoleranzen möglich, gleichmäßig auf beide Abtriebswellen 5, 6 verteilt wird.

Beim Zusatzmotor 8 des Kraftfahrzeugs 1 handelt es sich um einen Elektromotor mit einem nicht gezeigten zugeordneten Energiespeicher. Durch eine Ansteuerung des Zusatzmotors 8 durch die Steuereinrichtung 10 zur Bereitstellung eines Zusatzdrehmoments können die Abtriebswellen 5, 6 im Kraftfahrzeug 1 ausschließlich durch das Zusatzdrehmoment oder durch eine Kombination eines durch den Antriebsmotor 53 bereitgestellten Drehmoments und des Zusatzdrehmoments angetrieben werden. Das durch den Zusatzmotor 8 bereitgestellte Zusatzdrehmoment wird im Rahmen der Zuführung des Zusatzdrehmoments zu den Abtriebswellen 5, 6 mehrfach übersetzt, so dass die Drehmomente an den Abtriebswellen 5, 6 eine Proportionalität zu dem durch den Zusatzmotor 8 bereitgestellten Zusatzdrehmoment aufweisen, die von dem entsprechenden Übersetzungsfaktor abhängt.

Die Zusatzdrehmomente können durch den Zusatzmotor 8 auch derart bereitgestellt werden, dass sie einer Drehbewegung der Abtriebswellen 5, 6 entgegenwirken. Die Abtriebswellen 5, 6 werden gebremst. Insbesondere kann der Zusatzmotor 8 durch die Steuereinrichtung 10 als Generator betrieben werden, womit eine Rekuperation von Bewegungsenergie des Kraftfahrzeugs 1 möglich ist und der nicht gezeigte Energiespeicher geladen werden kann.

Bei dem Kraftfahrzeug 1 handelt sich um ein Kraftfahrzeug mit einem zu- und abschaltbaren Vierradantrieb. Ein vom Motor 53 bereitgestelltes Drehmoment bzw. eine Leistung des Motors wird zunächst über ein Getriebe 11 geführt, und anschließend über eines oder mehrere Differentiale 12 zwischen den Vorderrädern bzw. zwischen der Vorderachse und der Hinterachse verteilt. Das Differential 3 der Antriebsvorrichtung 2 ist von der von dem vorderen Differential 12 zur Antriebsvorrichtung 2 geführten Antriebswelle 2 über eine Kupplung 13 trennbar. Dies ist besonders vorteilhaft, wenn die Hinterräder des Kraftfahrzeugs 1 ausschließlich elektrisch durch den Zusatzmotor 8 betrieben werden sollen oder wenn an der Hinterachse ausschließlich eine Rekuperation von Bewegungsenergie erfolgen soll. Insbesondere kann ein Fahrbetrieb des Kraftfahrzeugs 1 derart erfolgen, dass die Antriebsvorrichtung 2 unter gewissen Bedingungen durch die Kupplung 13 von dem Antriebsmotor 53 entkoppelt ist, womit das Kraftfahrzeug zunächst ausschließlich durch einen Vorderradantrieb angetrieben wird. Ergänzend kann ein zusätzlicher Antrieb im zweiten Schaltzustand der Schalteinrichtung durch den Zusatzmotor 8 erfolgen, um die Fahrleistung des Kraftfahrzeugs 1 zu erhöhen, oder es kann durch den Zusatzmotor 8 im zweiten Schaltzustand Energie rekuperiert werden.

Fig. 2 zeigt ein Ausführungsbeispiel einer Antriebsvorrichtung 14, die ein Überlagerungsgetriebe 15 umfasst, durch das von einem Differential über eine Übersetzungseinrichtung bereitgestellte Drehmomente mit Drehmomenten eine Abtriebswelle 17 des Differentials und mit Drehmomenten eines Zusatzmotors 16 überlagerbar sind. Aus Übersichtlichkeitsgründen sind in den Fig. 2 bis 8 von Komponenten der jeweiligen Antriebsvorrichtung 14, 39, 46, 54, die bezüglich der Abtriebswelle 17 rotationssymmetrisch sind, nur jene Teile dargestellt, die oberhalb der Abtriebswelle 17 liegen. Die Darstellung ist nicht maßstabsgerecht. Der Zusatzmotor 16 ist koaxial um die Abtriebswelle 17 herum angeordnet. Alternativ könnte ein Zusatzmotor 16 vorgesehen sein, der benachbart zur Abtriebswelle 17 angeordnet ist und mit einem koaxial zur Abtriebswelle 17 angeordneten Zahnrad oder ähnlichem gekoppelt ist. Das Differential ist als doppeltes Planetengetriebe ausgebildet, dem über ein Hohlrad 37 ein Antriebsmoment von einem nicht gezeigten Antriebsmotor zuführbar ist. Über das Hohlrad 37 zugeführte Drehmomente werden über einen ersten und einen zweiten Planetenradsatz, von denen jeweils ein Planetenrad 18, 19 dargestellt ist und ein erstes Sonnenrad 22 auf die Abtriebswelle 17 und über einen gemeinsamen Planetenträger 20 der zwei Planetenradsätze auf die weitere Abtriebswelle 21 verteilt.

Das Überlagerungsgetriebe 15 ist über eine momentreduzierende Übersetzungseinrichtung, nämlich ein zweites Sonnenrad 23 des doppelten Planetengetriebes, mit dem Differential gekoppelt, um Drehmomente vom Differential an das Überlagerungsgetriebe bereitzustellen. Das doppelte Planetengetriebe mit seinen beiden Planetenradsätzen sowie dem ersten Sonnenrad 22 und dem zweiten Sonnenrad 23 ist als Ravigneaux-Satz ausgebildet, womit eine besonders kompakte Bauweise des Differentials und der momentreduzierenden Übertragungseinrichtung erreicht wird.

Das Überlagerungsgetriebe 15 umfasst ein erstes, ein zweites und ein drittes Planetengetriebe 24, 25, 26 sowie eine erste und eine zweite Bremsvorrichtung 27, 28, über die jeweils eine Welle des zweiten und des dritten Planetengetriebes 25, 26 bremsbar ist. Die erste und die zweite Bremsvorrichtung 27, 28 bilden gemeinsam die Schalteinrichtung, wobei im ersten Schaltzustand die erste Bremsvorrichtung 27 aktiv ist, das heißt die entsprechende Welle bremst, und im zweiten Schaltzustand die zweite Bremsvorrichtung 28 aktiv ist. Die erste und zweite Bremsvorrichtung 27, 28 sind durch eine nicht gezeigte Steuereinrichtung steuerbar, um den Schaltzustand der Schalteinrichtung zu wählen.

Das erste Planetengetriebe 24 bildet eine Überlagerungseinrichtung, die ein aus dem von dem Differential zugeführten Drehmoment abgeleitetes Drehmoment mit einem Drehmoment der Abtriebswelle 17 und einem Drehmoment des Zusatzmotors 16 überlagert. Hierzu treibt der Zusatzmotor 16 das Sonnenrad 29 des ersten Planetengetriebes 24 an und der Planetenträger 31 ist starr mit der Abtriebswelle 17 gekoppelt. Die Zuführung des abgeleiteten Drehmoments erfolgt über das Hohlrad, das als ein gemeinsames Hohlrad für das erste, das zweite und das dritte Planetengetriebe 24, 25, 26 ausgebildet ist. Je nach Schaltzustand der Schalteinrichtung wird dieses abgeleitete Drehmoment dem ersten Planetengetriebe 24 über das zweite Planetengetriebe 25 oder das dritte Planetengetriebe 26 zugeführt.

Das über das zweite Sonnenrad 23 aus dem Differential ausgekoppelte Drehmoment wird in das Überlagerungsgetriebe 15 einerseits über den Planetenträger 33 des zweiten Planetengetriebes 25 und andererseits über das Sonnenrad 34 des dritten Planetengetriebes 26 eingekoppelt. Ist die Schalteinrichtung im ersten Schaltzustand, so wird durch die erste Bremsvorrichtung 27 das Sonnenrad 35 des zweiten Planetengetriebes 25 gebremst bzw. blockiert, womit das zweite Planetengetriebe 25 in einem Zweiachsbetrieb betrieben wird, in dem das über den Planetenträger 33 eingekoppelte Drehmoment mit einer vorgegebenen Übersetzung und einem vorgegebenen relativen Drehsinn auf das gemeinsame Hohlrad 32 übertragen wird. Da im ersten Schaltzustand die zweite Bremsvorrichtung 28 nicht aktiv ist, ist der Planetenträger 36 des zweiten Planetengetriebes 26 im Wesentlichen frei drehbar, womit auch das Sonnenrad 34 im Wesentlichen kraftfrei gegenüber dem gemeinsamen Hohlrad 32 drehbar ist. Im ersten Schaltzustand wird ein Drehmoment somit vom zweiten Sonnenrad 23 über das zweite Planetengetriebe 25 auf das erste Planetengetriebe 24 übertragen.

Im zweiten Schaltzustand ist die erste Bremsvorrichtung 27 nicht aktiv und die zweite Bremsvorrichtung 28 aktiv. Entsprechend ist der Planetenträger 36 des dritten Planetengetriebes 26 gebremst, womit das dritte Planetengetriebe 26 über das gemeinsame Hohlrad 33 das über das Sonnenrad 23 zugeführte Drehmoment an das erste Planetengetriebe 24 mit einer vorgegebenen Übersetzung und einem vorgegebenen relativen Drehsinn überträgt. Aufgrund der unterschiedlichen Führung des Drehmoments vom zweiten Sonnenrad 23 zum gemeinsamen Hohlrad 32 in den zwei Schaltzuständen unterscheidet sich das abgeleitete Drehmoment, das am gemeinsamen Hohlrad 32 wirkt, zwischen den Schaltzuständen sowohl betragsmäßig als auch im Vorzeichen. Der Drehsinn des am gemeinsamen Hohlrad 32 wirkenden Drehmoments ist zwischen dem ersten und dem zweiten Schaltzustand daher unterschiedlich.

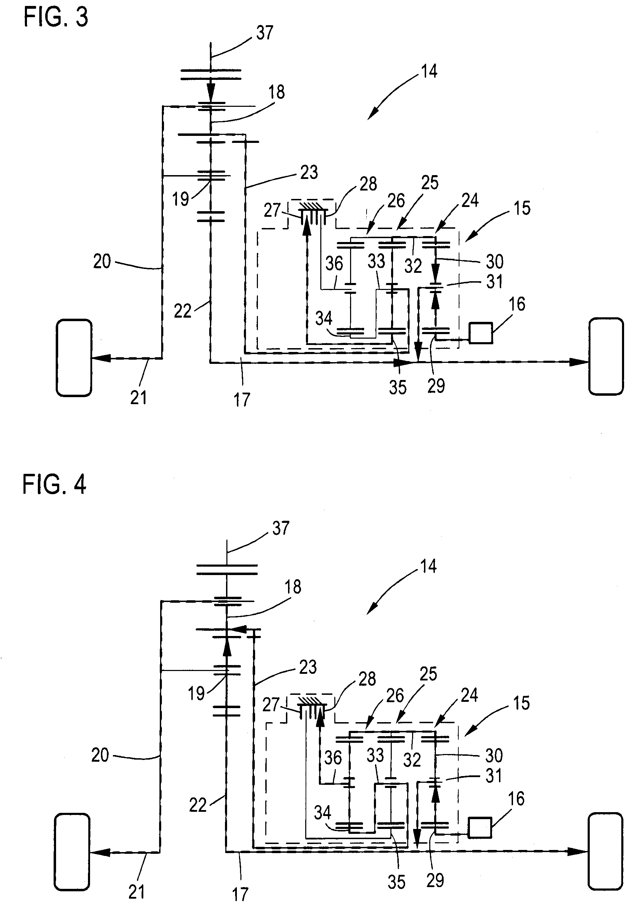

Wie im Folgenden mit Bezug auf Fig. 3 bis Fig. 5 erläutert, führen die unterschiedlichen Drehsinne des abgeleiteten Drehmoments an dem gemeinsamen Hohlrad 32 in den Schaltzuständen zu unterschiedlichen Wirkungsweisen eines durch den Zusatzmotor 16 bereitgestellten Zusatzmoments. In dem ersten Schaltzustand, das heißt bei einer Kopplung des zweiten Sonnenrades 23 über das zweite Planetengetriebe 25 an das erste Planetengetriebe 24, führt ein Aufbringen eines Zusatzdrehmoments durch den Zusatzmotor 16 zu einer Beeinflussung der Verteilung eines an dem Hohlrad 37 in das Differential eingebrachten Antriebsmoments auf die Abtriebswellen 17, 21. Im zweiten Schaltzustand, das heißt bei einer Kupplung des Sonnenrads 23 an das erste Planetengetriebe 24 über das Planetengetriebe 26, ist der Drehsinn der Drehmomentkopplung entgegensetzt zur Kopplung im ersten Schaltzustand, womit ein durch den Zusatzmotor 16 bereitgestelltes Zusatzmoment auf die Abtriebswellen 17, 21 verteilt wird. Die einzelnen Übersetzungen in der Antriebsvorrichtung sind derart gewählt, dass die Verteilung im Rahmen von produktionsbedingten Toleranzen gleichmäßig erfolgt.

Fig. 3 zeigt die Drehmomentkopplungen in der in Fig. 2 gezeigten Antriebsvorrichtungen bei einem Betrieb der Schalteinrichtung im ersten Schaltzustand. Beispielhaft ist die Momentverteilung an einer Hinterachse des Kraftfahrzeugs beim Fahren einer Linkskurve gezeigt. Beim Fahren einer Linkskurve sollen auf ein kurvenäußeres Rad größere Drehmomente übertragen werden als auf ein kurveninneres Rad. Daher soll ein Zusatzdrehmoment des Zusatzmotors genutzt werden, um die Verteilung eines über das Hohlrad 37 des Differentials eingekoppelten Antriebsmoment auf die Abtriebswellen 17, 21 zu beeinflussen. Die Pfeilrichtungen zeigen jeweils eine Richtung, in die eine Kopplung von Drehmomenten erfolgt.

Über das Differential wird das am Hohlrad 37 eingekoppelte Drehmoment auf die Abtriebswellen 21, 17 sowie über das zweite Sonnenrad 23 auf den Planetenträger 33 des zweiten Planetengetriebes 25 verteilt. Die Weiterführung des entsprechenden Drehmoments an das Sonnenrad 34 des dritten Planetengetriebes 28 ist nicht dargestellt, da der Planetenträger 36 des dritten Planetengetriebes 26, wie zu Fig. 2 erläutert, im ersten Schaltzustand freiläuft und somit keine Momentübertragung über das dritte Planetengetriebe 26 erfolgt.

Da das Sonnenrad 35 des zweiten Planetengetriebes 25 gebremst ist, wird das vom Differential über das zweite Sonnenrad 23 bereitgestellte Drehmoment über das gemeinsame Hohlrad 32 auf das erste Planetengetriebe 24 übertragen und dort mit dem vom Zusatzmotor 16 bereitgestellten Drehmoment überlagert. Dies führt zu einem insgesamt erhöhten Drehmoment an der zweiten Abtriebswelle 17, die das rechte Rad des Kraftfahrzeugs antreibt.

Wird beispielsweise als Antriebsmoment ein Drehmoment von 1500 Nm bereitgestellt, so kann durch den Zusatzmotor 16, insbesondere über eine zusätzliche nicht gezeigte Übersetzung ein Drehmoment von 110 Nm bereitgestellt werden und die Momentverteilung am Differential kann derart erfolgen, dass über den Planetenträger 19 durch das Differential ein Drehmoment von 151 Nm zum linken Rad übertragen wird, über das erste Sonnenrad 22 des Differentials ein Drehmoment von 1036 Nm auf die zweite Abtriebswelle 17 übertragen wird und über den Planetenträger 31 ein zusätzliches Drehmoment von 313 Nm an die zweite Abtriebswelle 17 übertragen wird, womit am rechten Rad insgesamt ein Drehmoment von 1349 Nm bereitsteht.

Aufgrund der Nutzung einer momentreduzierenden Übersetzungseinrichtung, also der zusätzlichen Auskopplung über das zweite Sonnenrad 23 des Differentials, wird dem Überlagerungsgetriebe über das zweite Sonnenrad 23 im erläuterten Beispiel nur ein reduziertes Drehmoment von 313 Nm zugeführt. Die erste Bremseinrichtung 27 bremst hierbei ein Drehmoment von 110 Nm. Ein Torque-Vectoring ist mit der dargestellten Antriebsvorrichtung somit bereits bei relativ kleinen über das Überlagerungsgetriebe geführten Drehmomenten möglich, womit die Komponenten des Überlagerungsgetriebes besonders klein und leicht dimensioniert werden können.

Fig. 4 zeigt die Antriebsvorrichtung gemäß Fig. 2, wobei die Schalteinrichtung im zweiten Schaltzustand betrieben wird und wobei eine nicht gezeigte Steuereinrichtung den Zusatzmotor 16 derart ansteuert, dass ein Antrieb zumindest der Hinterachse des Kraftfahrzeugs ausschließlich durch den Zusatzmotor 16 erfolgt. Hierzu kann das Hohlrad 37 durch eine nicht gezeigte Kupplungseinrichtung von einem Antriebsmotor des Kraftfahrzeugs entkoppelt werden.

Wie bereits zu Fig. 2 erläutert ist im zweiten Schaltzustand die Bremsvorrichtung 27 nicht aktiv und die Bremsvorrichtung 28 ist aktiv. Daher erfolgt über das zweite Planetengetriebe 25 keine Momentübertragung und die über das zweite Sonnenrad 23 bereitgestellten Drehmomente werden aufgrund des durch die Bremsvorrichtung 28 blockierte Planetenträgers des dritten Planetengetriebes 26 vom Sonnenrad 34 des dritten Planetengetriebes 28 auf das gemeinsame Hohlrad 26 und somit zum ersten Planetengetriebe 24 übertragen.

Ein Vergleich mit Fig. 3 zeigt, dass die Richtungen der Momentübertragung in nahezu allen Fällen mit der in Fig. 3 gezeigten Situation übereinstimmen, wobei sich die Richtung der Momentübertragung zwischen dem Differential über das Sonnenrad 23 zu bzw. von dem zweiten bzw. dritten Planetengetriebe 25, 26 jedoch im Vergleich zu Fig. 3 umdreht. Dies ist der Fall, da eine Drehmomentübertragung nicht wie in Fig. 3 gezeigt von dem Planetenträger 33 zu dem gemeinsamen Hohlrad 32 erfolgt, sondern von dem Sonnenrad 34 zu dem gemeinsamen Hohlrad 32, womit der Drehsinn des Drehmoments umgedreht wird und womit eine unterschiedliche Übersetzung erreicht wird.

Beispielsweise kann durch den Zusatzmotor 16, insbesondere über eine Übersetzung, ein Drehmoment von 360 Nm bereitgestellt werden. Aufgrund der zum ersten Schaltzustand unterschiedlichen Drehmomentkupplung zum Differential wird über das zweite Sonnenrad 23 ein Drehmoment von 360 Nm zum Differential geführt und über den Planetenträger 31 ein Drehmoment von 739 Nm an die Abtriebswelle 17. Das der Abtriebswelle 17 zugeführte Drehmoment verteilt sich aufgrund der zusätzlichen Momenteinkopplung über das zweite Sonnenrad 23 am Differential derart, dass 500 Nm über das der Abtriebswelle 17 zugeordnete Rad des Kraftfahrzeugs auf die Straße übertragen werden können und 239 Nm über das erste Sonnenrad 22 auf das Differential zurückwirken. Durch eine Überlagerung des über das erste Sonnenrad 22 von der Abtriebswelle 17 zum Differential geführten Drehmoments und des über das zweite Sonnenrad 23 zum Differential geführten Drehmoments wird über den gemeinsamen Planetenträger 20 auch für die Abtriebswelle 21 und somit für das linke Rad des Kraftfahrzeugs ein Drehmoment von 500 Nm bereitgestellt. Die zweite Bremseinrichtung muss im erläuterten Beispiel ein Drehmoment von 739 Nm bremsen.

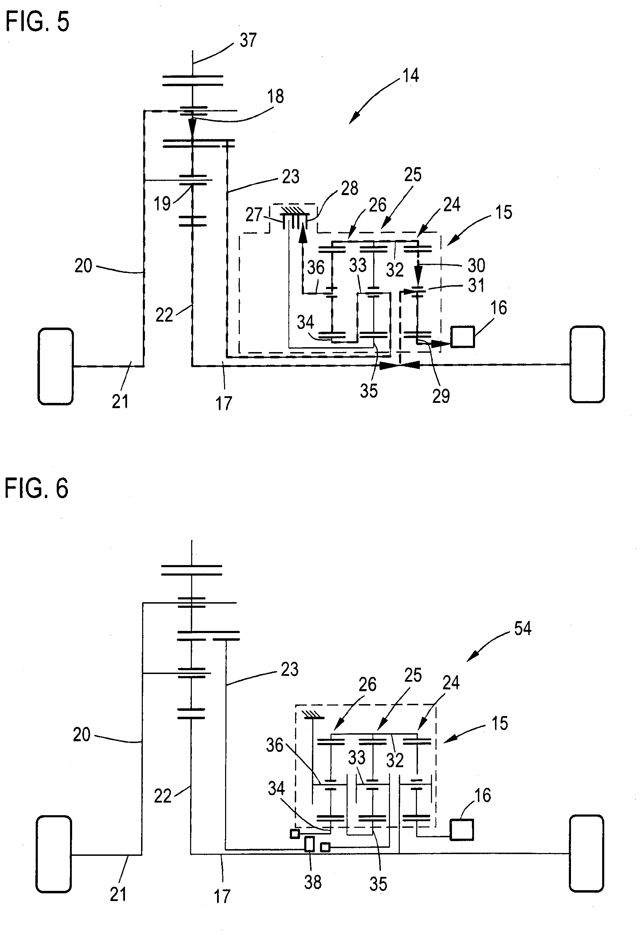

Fig. 5 zeigt die Kopplung von Drehmomenten bei einem Rekuperationsbetrieb, bei dem die Schalteinrichtung im zweiten Schaltzustand betrieben wird und bei dem der Zusatzmotor 16 als Generator betrieben wird. Beispielsweise sollen beide Räder durch eine Rekuperation mit einem Drehmoment von je 72 Nm gebremst werden. Das über die zweite Abtriebswelle 21 zum Differential geführte Drehmoment von 72 Nm wird nahezu gleichmäßig auf die zweite Abtriebswelle 17 und über das zweite Sonnenrad 23 auf das Überlagerungsgetriebe 15 verteilt.

Das erste Planetengetriebe 24 überlagert ein Drehmoment von 68,7 Nm, das vom Differential über das zweite Sonnenrad 23 und das dritte Planetengetriebe 26 zum gemeinsamen Hohlrad 23 geführt wurde und ein Drehmoment von 37,5 Nm, dass vom Zusatzmotor 16 über das Sonnenrad 29 eingekoppelt wurde zu einem Gesamtdrehmoment von 106,4 Nm, das über den Planetenträger 31 zur Abtriebswelle 17 geführt wird. Dieses Drehmoment ist dem der Abtriebswelle 17 über das erste Sonnenrad 22 zugeführten Drehmoment entgegengesetzt, weshalb von der Abtriebswelle 17 die Differenz der beiden Drehmomente von 72 Nm auf das zugeordnete Rad übertragen wird. Im Rekuperationsbetrieb werden somit gleiche Drehmomente auf beide Räder übertragen. Durch die dargestellte Nutzung der Antriebsvorrichtung 14 kann die aufgenommene kinetische Energie dem Zusatzmotor 16 zur Rekuperation zugeführt werden.

Fig. 6 zeigt ein weiteres Ausführungsbeispiel einer Antriebsvorrichtung 54, die funktional der in Fig. 2 gezeigten Antriebsvorrichtung 14 entspricht. Der Aufbau des Differentials zur Verteilung eines Antriebsmoments auf die Abtriebswellen 17, 21 und die Abzweigung von dem Überlagerungsgetriebe 15 zugeführten Drehmomenten über das Sonnenrad 23 entsprechen dem Aufbau der Antriebsvorrichtung 14 gemäß Fig. 2. Der Unterschied zwischen der Antriebsvorrichtung 54 und der Antriebsvorrichtung 14 besteht darin, dass die Führung der Drehmomente vom Sonnenrad 23 zum zweiten bzw. dritten Planetengetriebe 25, 26 sowie die Bremsung der Wellen der Planetengetriebe 25, 26 anders gelöst ist. In der Antriebsvorrichtung 54 sind der Planetenträger 36 des dritten Planetengetriebes 26 und das Sonnenrad 35 des zweiten Planetengetriebes 25 stets drehfest fixiert, so dass das zweite und das dritte Planetengetriebe 25, 26 jeweils im Zweiwellenbetrieb arbeiten. Die Auswahl, über welches der Planetengetriebe 25, 26 das über das zweite Sonnenrad 23 abgegriffene Drehmoment zu dem gemeinsamen Hohlrad 32 geführt wird, erfolgt durch eine Kupplungseinrichtung 38, durch die das zweite Sonnenrad 23 des Differentials im ersten Schaltzustand mit dem Planetenträger 33 des zweiten Planetengetriebes 25 und im zweiten Schaltzustand mit dem Sonnenrad 34 des dritten Planetengetriebes 26 gekoppelt wird. Somit wird in beiden Schaltzuständen eine Kopplung von Drehmomenten erreicht, die effektiv der jeweiligen in der Antriebsvorrichtung 14 gemäß Fig. 2 erreichten Kopplung entspricht.

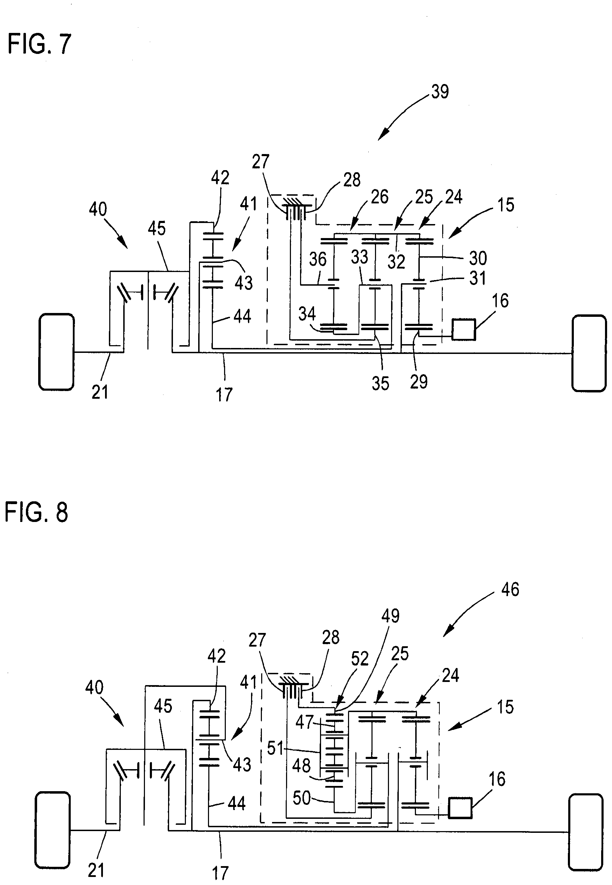

Die Antriebsvorrichtung 39 gemäß Fig. 7 entspricht bezüglich des Aufbaus des Überlagerungsgetriebes 15 der in Fig. 2 dargestellten Antriebsvorrichtung 14. Im Gegensatz zu dieser wird jedoch als Differential ein Kegelraddifferential 40 genutzt, über dessen Gehäuse 45 ein Antriebsmoment einkoppelbar ist, das auf die Abtriebswellen 17, 21 verteilt wird. Um das auf das Überlagerungsgetriebe 15 übertragene Drehmoment auch bei Nutzung des Kegelraddifferentials 40 zu reduzieren, ist als momentreduzierende Übersetzungseinrichtung ein weiteres Planetengetriebe 41 vorgesehen. Das Gehäuse des Kegelraddifferentials 40 ist starr an das Hohlrad 42 des weiteren Planetengetriebe 41 gekoppelt. Das zum Überlagerungsgetriebe 15 geführte Drehmoment wird über ein Sonnenrad 44 abgegriffen. Der Planetenträger 43 ist starr mit der Abtriebswelle 17 gekoppelt.

Durch die Nutzung des weiteren Planetengetriebes 41 als momentreduzierende Übertragungeinrichtung kann auch bei Nutzung eines Kegelradgetriebes eine Funktionalität erreicht werden, wie sie zu den vorangehenden Figuren erläutert wurde.

In Abhängigkeit der gewünschten Übersetzungsfaktoren ist es auch möglich, dass weitere Planetengetriebe 41, das die momentreduzierende Übertragungseinrichtung bildet, anders an das Kegelraddifferential 40, die Abtriebswelle 17 und das Überlagerungsgetriebe 15 anzubinden. Insbesondere kann das Gehäuse 45 des Kegelraddifferentials 40 auch starr mit dem Planetenträger 43 gekoppelt werden und die Abtriebswelle 17 mit dem Hohlrad. Es wird somit eine gleiche Funktion bei einer anderen Übersetzung erreicht.

Fig. 8 zeigt ein weiteres Ausführungsbeispiel einer Antriebsvorrichtung 46, die weitgehend wie die in Fig. 7 dargestellte Antriebsvorrichtung 39 aufgebaut ist. Die Unterschiede zu der in Fig. 7 dargestellten Antriebsvorrichtung 39 sind, dass in der Antriebsvorrichtung 46 die bereits zu Fig. 7 erläuterte alternative Ankopplung des weiteren Planetengetriebes 41 an das Kegelraddifferential 40 sowie die Abtriebswelle 17 genutzt wird und dass eine andere Konfiguration für das dritte Planetengetriebe 52 genutzt wird. Das dritte Planetengetriebe 52 ist als ein Planetengetriebe 52 ausgebildet, bei dem die Kopplung zwischen Hohlrad 49 und Sonnenrad 50 über zwei Sätze von Planetenrädern, von denen die Planetenräder 47, 48 dargestellt sind und die von einem gemeinsamen Planetenträger 51 getragen werden, erfolgt.

Im gezeigten Ausführungsbeispiel folgt die Zuführung des Drehmoments vom Differential zum dritten Planetengetriebe 52 über das Sonnenrad 50. Das Hohlrad 49 ist im Planetengetriebe 52 separat von dem Hohlrad der weiteren Planetengetriebe 24, 25 ausgebildet und durch die zweite Bremsvorrichtung 28 bremsbar. Ein gemeinsames Hohlrad der Planetengetriebe 24, 25 ist mit dem Planetenträger 51 des dritten Planetengetriebes 52 gekoppelt.

Durch die Antriebsvorrichtung 46 wird im Wesentlichen die gleiche Funktion erreicht wie durch die in den weiteren Figuren dargestellten Antriebsvorrichtungen, wobei durch Nutzung eines dritten Planetengetriebes 52 mit mehreren Planetenradsätzen eine flexiblere Anpassung der Übersetzungen möglich ist. Insbesondere kann ein großer Unterschied der Übersetzungen zwischen dem ersten und dem zweiten Schaltzustand und damit zwischen einer Boost- bzw. Rekuperationsfunktion und einem Torque-Vectoring erreicht werden.

## Patentansprüche

1. Antriebsvorrichtung für ein Kraftfahrzeug, mit einem Differential (3) zur Verteilung eines über eine Antriebswelle (4) zuführbaren Antriebsmoments auf zwei Abtriebswellen (5, 6, 17, 21) und einem mit dem Differential (3), einer der Abtriebswellen (6, 17) und einem Zusatzmotor (8, 16) gekoppelten Überlagerungsgetriebe (7, 15) zur Überlagerung von von der Abtriebswelle (6, 17), dem Differential (3) und dem Zusatzmotor (8, 16) zugeführten Drehmomenten, wobei das Differential (3) über eine momentreduzierende Übersetzungseinrichtung (9) mit dem Überlagerungsgetriebe (7, 15) gekoppelt ist, wobei das Überlagerungsgetriebe (7, 15) eine durch eine Steuereinrichtung (10) steuerbare Schalteinrichtung umfasst, wobei das Überlagerungsgetriebe (7, 15) in einem ersten Schaltzustand der Schalteinrichtung die von der Abtriebswelle (6, 17), dem Differential (3) und dem Zusatzmotor (8, 16) zugeführten Drehmomente derart überlagert, dass die Verteilung des Antriebsmoments auf die Abtriebswellen (5, 6, 17, 21) von einem durch den Zusatzmotor (8, 16) ausgeübten Zusatzdrehmoment abhängt,
**dadurch gekennzeichnet,**
**dass** das Überlagerungsgetriebe (7, 15) in einem zweiten Schaltzustand der Schalteinrichtung die von der Abtriebswelle (6, 17), dem Differential (3) und dem Zusatzmotor (8, 16) zugeführten Drehmomente derart überlagert, dass das Zusatzdrehmoment gleichmäßig auf beide Abtriebswellen (5, 6, 17, 21) verteilt wird.

2. Antriebsvorrichtung nach Anspruch 1,
**dadurch gekennzeichnet,**
**dass** das Überlagerungsgetriebe (7, 15) eine Überlagerungseinrichtung umfasst, die die von der Abtriebswelle (6, 17) und dem Zusatzmotor (8, 16) zugeführten Drehmomente mit einem aus dem von dem Differential (3) zugeführten Drehmoment abgeleiteten Drehmoment überlagert, wobei das abgeleitete Drehmoment in dem ersten Schaltzustand einen ersten Drehsinn und in dem zweiten Schaltzustand einen dem ersten Drehsinn entgegen gesetzten zweiten Drehsinn aufweist.

3. Antriebsvorrichtung nach Anspruch 2,
**dadurch gekennzeichnet,**
**dass** das Überlagerungsgetriebe (7, 15) ein erstes, ein zweites und ein drittes Planetengetriebe (24, 25, 26, 52) umfasst, die jeweils ein Hohlrad (32), ein Sonnenrad (29, 34, 35) und wenigstens ein an einem Planetenträger (31, 33, 36) angeordnetes Planetenrad umfassen, wobei das erste Planetengetriebe (24) die Überlagerungseinrichtung bildet, der das abgeleitete Drehmoment im ersten Schaltzustand über das zweite Planetengetriebe (25) und im zweiten Schaltzustand über das dritte Planetengetriebe (26, 52) zugeführt ist.

4. Antriebsvorrichtung nach Anspruch 3,
**dadurch gekennzeichnet,**
**dass** die Hohlräder des ersten, des zweiten und des dritten Planetengetriebes als ein gemeinsames Hohlrad (32) ausgebildet sind.

5. Antriebsvorrichtung nach Anspruch 3 oder 4,
**dadurch gekennzeichnet,**
**dass** die Schalteinrichtung ausgebildet ist, in dem ersten Schaltzustand eine Rotation des Hohlrades (32), des Sonnenrades (35) oder des Planetenträgers (33) des zweiten Planetengetriebes (25) zu blockieren und in dem zweiten Schaltzustand eine Rotation des Hohlrades (32, 49), des Sonnenrades (34) oder des Planetenträgers (36) des dritten Planetengetriebes (26, 52) zu blockieren.

6. Antriebsvorrichtung nach Anspruch 5,
**dadurch gekennzeichnet,**
**dass** die Schalteinrichtung eine erste Bremsvorrichtung (27) zum Bremsen des Hohlrades (32), des Sonnenrades (35) oder des Planetenträgers (33) des zweiten Planetengetriebes (25) und eine zweite Bremsvorrichtung (28) zum Bremsen des Hohlrades (32, 29), des Sonnenrades (34) oder des Planetenträgers (36) des dritten Planetengetriebes (26, 52) umfasst, wobei im ersten Schaltzustand die erste Bremsvorrichtung (27) und im zweiten Schaltzustand die zweite Bremsvorrichtung (28) aktiv ist.

7. Antriebsvorrichtung nach Anspruch 3 oder 4,
**dadurch gekennzeichnet,**
**dass** das Hohlrad (32), das Sonnenrad (35) oder der Planetenträger (33) des zweiten Planetengetriebes (25) und das Hohlrad (26, 52), das Sonnenrad (34) oder der Planetenträger (36) des dritten Planetengetriebes (26, 52) dauerhaft blockiert sind, wobei die Schalteinrichtung eine Kupplungseinrichtung (38) umfasst, die das dem Überlagerungsgetriebe (7, 15) von dem Differential (3) zugeführte Drehmoment in dem ersten Schaltzustand dem zweiten Planetengetriebe (25) und in dem zweiten Schaltzustand dem dritten Planetengetriebe (26, 52) zuführt.

8. Antriebsvorrichtung nach einem der Ansprüche 3 bis 7,
**dadurch gekennzeichnet,**
**dass** als das erste und/oder das zweite Planetengetriebe (24, 25, 26, 52) ein Planetengetriebe (52) mit zwei Planetenradsätzen genutzt wird.

9. Antriebsvorrichtung nach einem der vorangehenden Ansprüche,
**dadurch gekennzeichnet,**
**dass** das Differential (3) als doppeltes Planetengetriebe mit einem ersten und einem zweiten Planetenradsatz und einem ersten und einem zweiten Sonnenrad (20, 22) ausgebildet ist, wobei ein durch das Antriebsmoment antreibbares Hohlrad (37) über das erste Sonnenrad (20) und den ersten und den zweiten Planetenradsatz mit einer der Abtriebswellen (17, 21) und über den zweiten Planetenradsatz und das zweite Sonnenrad (22) als momentreduzierende Übersetzungseinrichtung mit dem Überlagerungsgetriebe (15) gekoppelt ist.

10. Antriebsvorrichtung nach einem der Ansprüche 1 bis 8,
**dadurch gekennzeichnet,**
**dass** das Differential (3) als ein Kegelraddifferential (40) ausgebildet ist, wobei als momentreduzierende Übersetzungseinrichtung ein weiteres Planetengetriebe (41), das ein von einem Gehäuse (45) des Kegelraddifferentials (40) zugeführtes Drehmoment mit einem von einer der Abtriebswellen (17) zugeführten Drehmoment zur Bereitstellung des dem Überlagerungsgetriebe (15) zugeführten Drehmoments überlagert.

11. Kraftfahrzeug,
**dadurch gekennzeichnet,**
**dass** es eine Antriebsvorrichtung (2, 14, 39, 46, 54) nach einem der vorangehenden Ansprüche und einen Antriebsmotor (53) zur Bereitstellung des Antriebsmoments umfasst.

12. Verfahren zum Betrieb eines Kraftfahrzeugs mit einem Antriebsmotor, und einer Antriebsvorrichtung zum Antrieb der Räder wenigstens einer Achse des Kraftfahrzeugs, wobei die Antriebsvorrichtung ein Differential, durch das ein Antriebsmoment, das über eine Antriebswelle von dem Antriebsmotor zugeführt wird, auf zwei Abtriebswellen verteilt wird, und ein mit dem Differential, einer der Abtriebsachsen und einem Zusatzmotor gekoppeltes Überlagerungsgetriebe, durch das von der Abtriebsachse, dem Differential und dem Zusatzmotor zugeführte Drehmomente überlagert werden, umfasst, wobei das.Differential über eine momentreduzierende Übersetzungseinrichtung mit dem Überlagerungsgetriebe gekoppelt ist, wobei das Überlagerungsgetriebe eine Schalteinrichtung umfasst, die durch eine Steuereinrichtung gesteuert wird, wobei durch das Überlagerungsgetriebe in einem ersten Schaltzustand der Schalteinrichtung die von der Abtriebsachse, dem Differential und dem Zusatzmotor zugeführten Drehmomente derart überlagert werden, dass die Verteilung des Antriebsmoments auf die Abtriebswellen von einem durch den Zusatzmotor ausgeübten Zusatzdrehmoment abhängt,
**dadurch gekennzeichnet,**
**dass** durch das Überlagerungsgetriebe in einem zweiten Schaltzustand der Schalteinrichtung die von der Abtriebsachse, dem Differential und der Zusatzmaschine zugeführten Drehmomente derart überlagert werden, dass das Zusatzdrehmoment gleichmäßig auf beide Abtriebswellen verteilt wird.

13. Verfahren nach Anspruch 12,
**dadurch gekennzeichnet,**
**dass** in wenigstens einem Betriebsmodus der Steuereinrichtung die Schalteinrichtung in dem zweiten Schaltzustand betrieben wird, wobei der Zusatzmotor durch die Steuereinrichtung zur Bereitstellung eines Drehmoments zum Antrieb des Kraftfahrzeugs angesteuert wird.

14. Verfahren nach Anspruch 12 oder 13,
**dadurch gekennzeichnet,**
**dass** als Zusatzmotor ein Elektromotor mit einer zugeordneten Energiespeichereinrichtung genutzt wird, wobei in wenigstens einem Betriebsmodus der Steuereinrichtung die Schalteinrichtung in dem zweiten Schaltzustand betrieben wird, wobei der Zusatzmotor als Generator zum Laden der Energiespeichereinrichtung betrieben wird.

## Claims

1. Drive unit for a motor vehicle, with a differential gear (3) for the distribution of a drive moment suppliable via a drive shaft (4) onto two output shafts (5, 6, 17, 21) and an superposition transmission (7, 15), coupled with the differential gear (3), one of the output shafts (6, 17) and an additional motor (8, 16), for superimposing torques supplied by the output shaft (6, 17), the differential gear (3) and the additional motor (8, 16), wherein the differential gear (3) is coupled via a moment-reducing transmission device (9) with the superposition transmission (7, 15), wherein the superposition transmission (7, 15) includes a switching apparatus controllable by a control device (10), wherein the superposition transmission (7, 15) in a first switching state of the switching apparatus superimposes the torques supplied by the output shaft (6, 17), the differential gear (3) and the additional motor (8, 16) such that the distribution of the drive moment onto the output shafts (5, 6, 17, 21) depends on an additional torque applied by the additional motor (8, 16),
**characterised in**
**that** the superposition transmission (7, 15) in a second switching state of the switching apparatus superimposes the torques supplied by the output shaft (6, 17), the differential gear (3) and the additional motor (8, 16) such that the additional torque is distributed equally onto both output shafts (5, 6, 17, 21).

2. Drive unit according to claim 1,
**characterised in**
**that** the superposition transmission (7, 15) includes a superposition device which superimposes the torques supplied by the output shaft (6, 17) and the additional motor (8, 16) with a torque derived from the torque supplied from the differential gear (3), wherein the derived torque in the first switching state has a first rotational direction and in the second switching state a second rotational direction opposite to the first rotational direction.

3. Drive unit according to claim 2,
**characterised in**
**that** the superposition transmission (7, 15) includes a first, a second and a third planetary gear (24, 25, 26, 52), which respectively include a hollow wheel (32), a sun wheel (29, 34, 35) and at least one planet wheel disposed on a planet carrier (31, 33, 36), wherein the first planetary gear (24) forms the superposition device, to which the derived torque is supplied in the first switching state via the second planetary gear (25) and in the second state via the third planetary gear (26, 52).

4. Drive unit according to claim 3,
**characterised in**
**that** the hollow wheels of the first, the second and the third planetary gear are formed as a shared hollow wheel (32).

5. Drive unit according to claim 3 or 4,
**characterised in**
**that** the switching device is configured in the first switching state to block a rotation of the hollow wheel (32), the sun wheel (35) or the planet carrier (33) of the second planetary gear (25) and in the second switching state to block a rotation of the hollow wheel (32, 49), the sun wheel (34) or the planet carrier (36) of the third planetary gear (26, 52).

6. Drive unit according to claim 5,
**characterised in**
**that** the switching device includes a first braking apparatus (27) for braking the hollow wheel (32), the sun wheel (35) or the planet carrier (33) of the second planetary gear (25) and a second braking apparatus (28) for braking the hollow wheel (32, 29), the sun wheel (34) or the planet carrier (36) of the third planetary gear (26, 52), wherein in the first switching state the first braking device (27) and in the second switching state of the second braking device (28) is active.

7. Drive unit according to claim 3 or 4,
**characterised in**
**that** the hollow wheel (32), the sun wheel (35) or the planet carrier (33) of the second planetary gear (25) and the hollow wheel (26, 52), the sun wheel (34) or the planet carrier (36) of the third planetary gear (26, 52) are permanently blocked, wherein the switching device includes a coupling apparatus (38) which supplies the torque supplied to the superposition transmission (7, 15) from the differential gear (3) in the first switching state to the second planetary gear (25) and in the second switching state to the third planetary gear (26, 52).

8. Drive unit according to any of claims 3 to 7,
**characterised in**
**that** a planetary gear (52) having two planetary gear sets is used as the first and/or the second planetary gear (24, 25, 26, 52).

9. Drive unit according to any of the preceding claims,
**characterised in**
**that** the differential gear (3) is in the form of a double planetary gear having a first and a second planetary gear set and a first and a second sun wheel (20, 22), wherein a hollow wheel (37) driveable by the drive moment is coupled via the first sun wheel (20) and the first and the second planetary gear set with one of the output shafts (17, 21) and via the second planetary gear set and the second wheel (22) as moment-reducing transmission apparatus with the superposition transmission (15).

10. Drive unit according to any of claims 1 to 8,
**characterised in**
**that** the differential gear (3) is in the form of a bevel-gear differential (40), wherein as moment-reducing transmission apparatus a further planetary gear (41), which superimposes a torque supplied from a housing (45) of the bevel-gear differential (40) with a torque supplied from one of the output shafts (17) for providing the torque supplied to the superposition transmission (15).

11. Motor vehicle,
**characterised in**
**that** it includes a drive unit (2, 14, 39, 46, 54) according to any of the preceding claims and a drive motor (53) for the provision of the drive moment.

12. Method for operating a motor vehicle having a drive motor and a drive unit for driving the wheels of at least one axle of the motor vehicle, wherein the drive unit includes a differential gear, by means of which a drive moment, which is supplied via a drive shaft from the drive motor, is distributed onto two output shafts, and a superposition transmission coupled with the differential gear, one of the drive shafts and an additional motor, by means of which the torques supplied by the drive shaft, the differential gear and the additional motor are superimposed, wherein the differential gear is coupled via a moment-reducing transmission device with the superposition transmission, wherein the superposition transmission includes a switching apparatus, which is controlled by a control device, wherein by means of the superposition transmission in a first switching state of the switching apparatus the torques supplied by the drive shaft, the differential gear and the additional motor are superimposed such that the distribution of the drive moment onto the output shafts depends on an additional torque exerted by the additional motor,
**characterised in**
**that** by means of the superposition transmission in a second switching state of the switching apparatus the torques supplied by the drive shaft, the differential gear and the additional machine are superimposed such that the additional torque is distributed equally onto both output shafts.

13. Method according to claim 12,
**characterised in**
**that** in at least one operating mode of the control device the switching device is operated in the second switching state, wherein the additional motor is controlled by the control device to provide a torque for driving the motor vehicle.

14. Method according to claim 12 or 13,
**characterised in**
**that** as an additional motor an electric motor having an assigned energy storage apparatus is used, wherein in at least one operating mode of the control device the switching device is operated in the second switching state, wherein the additional motor is operated as a generator for charging the energy storage apparatus.

## Revendications

1. Dispositif d'entraînement moteur pour un véhicule automobile, avec un différentiel (3) pour la distribution d'un couple d'entraînement pouvant être amené par le biais d'un arbre d'entraînement (4) sur deux arbres de sortie (5, 6, 17, 21) et une transmission de superposition (7, 15) couplée avec le différentiel (3), un des arbres de sortie (6, 17) et un moteur supplémentaire (8, 16) pour la superposition de couples amenés par l'arbre de sortie (6, 17), le différentiel (3) et le moteur supplémentaire (8, 16), dans lequel le différentiel (3) est couplé avec la transmission de superposition (7, 15) par le biais d'un dispositif de transmission réducteur de couple (9), dans lequel la transmission de superposition (7,15) comprend un dispositif de commutation pouvant être commandé par un dispositif de commande (10), dans lequel la transmission de superposition (7, 15) superpose dans un premier état de commutation du dispositif de commutation, les couples amenés par l'arbre de sortie (6, 17), le différentiel (3) et le moteur supplémentaire (8, 16) de sorte que la distribution du couple d'entraînement sur les arbres de sortie (5, 6, 17, 21) dépend d'un couple supplémentaire exercé par le moteur supplémentaire (8, 16),
**caractérisé en ce**
**que** la transmission de superposition (7, 15) superpose, dans un deuxième état de commutation du dispositif de commutation, les couples amenés par l'arbre de sortie (6, 17), le différentiel (3) et le moteur supplémentaire (8, 16) de sorte que le couple supplémentaire est distribué uniformément sur les deux arbres de sortie (5, 6, 17, 21).

2. Dispositif d'entraînement moteur selon la revendication 1,
**caractérisé en ce**
**que** la transmission de superposition (7, 15) comprend un dispositif de superposition, qui superpose les couples amenés par l'arbre de sortie (6, 17) et le moteur supplémentaire (8, 16) avec un couple dérivé du couple amené par le différentiel (3), dans lequel le couple dérivé présente dans le premier état de commutation, un premier sens de rotation et dans le deuxième état de commutation, un deuxième sens de rotation opposé au premier sens de rotation.

3. Dispositif d'entraînement moteur selon la revendication 2,
**caractérisé en ce**
**que** la transmission de superposition (7, 15) comprend un premier, un deuxième et un troisième engrenage planétaire (24, 25, 26, 52), qui comprennent respectivement une roue creuse (32), une roue solaire (29, 34, 35) et au moins une roue planétaire agencée au niveau d'un porte-satellites (31, 33, 36), dans lequel le premier engrenage planétaire (24) forme le dispositif de superposition, auquel le couple dérivé est amené dans le premier état de commutation par le biais du deuxième engrenage planétaire (25) et dans le deuxième état de commutation par le biais du troisième engrenage planétaire (26, 52).

4. Dispositif d'entraînement moteur selon la revendication 3,
**caractérisé en ce**
**que** les roues creuses du premier, du deuxième et du troisième engrenage planétaire sont réalisées en tant que roue creuse commune (32).

5. Dispositif d'entraînement moteur selon la revendication 3 ou 4,
**caractérisé en ce**
**que** le dispositif de commutation est réalisé pour bloquer dans le premier état de commutation, une rotation de la roue creuse (32), de la roue solaire (35) ou du porte-satellites (33) du deuxième engrenage planétaire (25) et pour bloquer dans le deuxième état de commutation, une rotation de la roue creuse (32, 49), de la roue solaire (34) ou du porte-satellites (36) du troisième engrenage planétaire (26, 52).

6. Dispositif d'entraînement moteur selon la revendication 5,
**caractérisé en ce**
**que** le dispositif de commutation comprend un premier dispositif de freinage (27) pour le freinage de la roue creuse (32), de la roue solaire (35) ou du porte-satellites (33) du deuxième engrenage planétaire (25) et un deuxième dispositif de freinage (28) pour le freinage de la roue creuse (32, 29), de la roue solaire (34) ou du porte-satellites (36) du troisième engrenage planétaire (26, 52), dans lequel le premier dispositif de freinage (27) est actif dans le premier état de commutation et le deuxième dispositif de freinage (28) est actif dans le deuxième état de commutation.

7. Dispositif d'entraînement moteur selon la revendication 3 ou 4,
**caractérisé en ce**
**que** la roue creuse (32), la roue solaire (35) ou le porte-satellites (33) du deuxième engrenage planétaire (25) et la roue creuse (26, 52), la roue solaire (34) ou le porte-satellites (36) du troisième engrenage planétaire (26, 52) sont bloqués durablement, dans lequel le dispositif de commutation comprend un dispositif de liaison (38), qui amène le couple amené à la transmission de superposition (7, 15) par le différentiel (3) dans le premier état de commutation au deuxième engrenage planétaire (25) et dans le deuxième état de commutation au troisième engrenage planétaire (26, 52).

8. Dispositif d'entraînement moteur selon l'une quelconque des revendications 3 à 7,
**caractérisé en ce**
**qu'**un engrenage planétaire (52) avec deux jeux de roues planétaires est utilisé en tant que premier et/ou deuxième engrenage planétaire (24, 25, 26, 52).

9. Dispositif d'entraînement moteur selon l'une quelconque des revendications précédentes,
**caractérisé en ce**
**que** le différentiel (3) est réalisé en tant que double engrenage planétaire avec un premier et un deuxième jeu de roues planétaires et une première et une deuxième roue solaire (20, 22), dans lequel une roue creuse (37) pouvant être entraînée par le couple d'entraînement est couplée avec un des arbres de sortie (17, 21) par le biais de la première roue solaire (20) et du premier et du deuxième jeu de roues planétaires et avec la transmission de superposition (15) par le biais du deuxième jeu de roues planétaires et de la deuxième roue solaire (22) en tant que dispositif de transmission réducteur de couple.

10. Dispositif d'entraînement moteur selon l'une quelconque des revendications 1 à 8,
**caractérisé en ce**
**que** le différentiel (3) est réalisé en tant que différentiel à engrenage conique (40), dans lequel en tant que dispositif de transmission réducteur de couple un autre engrenage planétaire (41), qui superpose un couple amené par un boîtier (45) du différentiel à engrenage conique (40) avec un couple amené par un des arbres de sortie (17) pour la mise à disposition du couple amené à la transmission de superposition (15).

11. Véhicule automobile,
**caractérisé en ce**
**qu'**il comprend un dispositif d'entraînement moteur (2, 14, 39, 46, 54) selon l'une quelconque des revendications précédentes et un moteur d'entraînement (53) pour la mise à disposition du couple d'entraînement.

12. Procédé d'opération d'un véhicule automobile avec un moteur d'entraînement, et un dispositif d'entraînement moteur pour l'entraînement des roues d'au moins un axe du véhicule automobile, dans lequel le dispositif d'entraînement moteur comprend un différentiel, par lequel un couple d'entraînement, qui est amené par le moteur d'entraînement par le biais d'un arbre d'entraînement, est distribué sur deux arbres de sortie, et une transmission de superposition couplée avec le différentiel, un des axes de sortie et un moteur supplémentaire, par laquelle des couples amenés par l'axe de sortie, le différentiel et le moteur supplémentaire, sont superposés, dans lequel le différentiel est couplé avec la transmission de superposition par le biais d'un dispositif de transmission réducteur de couple, dans lequel la transmission de superposition comprend un dispositif de commutation, qui est commandé par un dispositif de commande, dans lequel les couples amenés par l'axe de sortie, le différentiel et le moteur supplémentaire sont superposés par la transmission de superposition dans un premier état de commutation du dispositif de commutation, de sorte que la distribution du couple d'entraînement sur les arbres de sortie dépend d'un couple supplémentaire exercé par le moteur supplémentaire,
**caractérisé en ce**
**que** les couples amenés par l'axe de sortie, le différentiel et le moteur supplémentaire sont superposés par la transmission de superposition dans un deuxième état de commutation du dispositif de commutation de sorte que le couple supplémentaire est distribué uniformément sur les deux arbres de sortie.

13. Procédé selon la revendication 12,
**caractérisé en ce**
**que** dans au moins un mode de fonctionnement du dispositif de commande, le dispositif de commutation fonctionne dans le deuxième état de commutation, dans lequel le moteur supplémentaire est commandé par le dispositif de commande pour la mise à disposition d'un couple pour l'entraînement du véhicule automobile.

14. Procédé selon la revendication 12 ou 13,
**caractérisé en ce**
**qu'**un moteur électrique avec un dispositif accumulateur d'énergie associé est utilisé en tant que moteur supplémentaire, dans lequel dans au moins un mode de fonctionnement du dispositif de commande, le dispositif de commutation fonctionne dans le deuxième état de commutation, dans lequel le moteur supplémentaire fonctionne en tant que générateur pour la charge du dispositif accumulateur d'énergie.
